# EUROPEAN PATENT SPECIFICATION

(11) **EP 4 763 487 B1**
(45) Date of publication and mention of the grant of the patent: **09.12.2026**
(21) Application number: 24222979.7
(22) Date of filing: 23.12.2024
(51) Int. Cl.: B29C 70/48, B29C 70/44

(54) **METHOD OF MANUFACTURING A COMPOSITE PART, AND MOLDING TOOL**
VERFAHREN ZUR HERSTELLUNG EINES VERBUNDTEILS UND FORMWERKZEUG
PROCÉDÉ DE FABRICATION D'UNE PIÈCE COMPOSITE ET OUTIL DE MOULAGE

(43) Date of publication of application: 24.06.2026
(73) Proprietor: AIRBUS Operations GmbH, 21129 Hamburg (DE)
(72) Inventor: Teich, Benjamin, 21129 Hamburg (DE)
(74) Representative: KASTEL Patentanwälte PartG mbB

(56) References cited:
- DE-U1- 202015 104 700
- US-A1- 2012 141 765

## Description

The invention relates to a method of manufacturing a composite part. Further, the invention relates to a molding tool for manufacturing a composite part. In particular, the method and the tool are used for manufacturing a composite part of an aircraft.

Tools for Resin Transfer Molding (RTM) or in short "RTM tools" usually consist of a base and a lid which are creating a cavity in between in which a composite part is formed. In the RTM process, a dry fibre preform is placed in the tool and a resin is injected at a specific pressure. An RTM press is closing the tool and counteracts an opening force caused by the internal tool pressure.

The time to infiltrate the fibre preform is driven by the injection pressure, the viscosity of the resin and the permeability of the preform. The pressure and viscosity cannot be changed easily and thus are given parameters. The permeability of the preform can be changed by opening the tool slightly (ca. 1-5mm) to relax the preform and / or to create a gap between the preform and the inner surface of the tool. The tool has a seal which allows to create a tool opening which forms a gap without loss of tightness.

In a so called "Gap RTM" process, the RTM press is keeping the tool open by some millimeters during the injection of the resin by an active displacement control of the press bolster, and is closing the tool finally after the end of the injection process. The process is actively controlled and requires a displacement controlled process capability. The press is strong and stiff enough to keep the tool open or at the defined gap during the process. The tool is expected to be stiff enough to avoid relevant deformations, and the same applies for the press.

DE 20 2015 104 700 U1 describes a device for producing a fibre-reinforced plastic component with a flowable resin system in a molding tool, which comprises at least two tool parts for forming a cavity, and a press with a pressure device for applying a pressing pressure to the molding tool via clamping plates. One or both tool parts deforms along a bending line in the course of the production process, and the resin system moves within the cavity in the course of the production process and thereby forms a flow process. Finally, a fibre-reinforced plastic component with at least one gap width of the cavity is formed within the cavity. A correction device is arranged for influencing-the bending line of a tool part and/or-the flow process and/or-the gap width of the cavity between the tool parts during the production process.

US 202 401 576 13 A1 describes a method of manufacturing a composite material through a wet compression molding (WCM) process. The internal pressure of a mold is controlled so that productivity may be improved due to process automation through application of a resin using a robot. Quality of the composite material may be improved due to minimization of deformation of a foam core through control of the internal pressure of the mold. A pressure sensor serves to detect whether or not the internal pressure of the mold exceeds a predetermined pressure value. The method includes controlling the internal pressure of the mold by reducing the raising speed of a lower slide of the mold upon determining that the internal pressure of the mold exceeds the predetermined pressure value.

JP 2013 209 510 A discloses a method for manufacturing an in-mold coated FRP molded body by an RTM (Resin Transfer Molding) molding method which includes heating a cavity surface of a movable mold part and a fixed mold part is heated to a temperature at which the matrix resin and the fiber-reinforced resin molded body coating composition are cured. The matrix resin may be set to a temperature at which the matrix resin is not cured, and heating may be performed after injection. The matrix resin in which the curing agent or the like has been mixed is degassed under reduced pressure, and then charged into a matrix resin tank. The fiber-reinforced resin molded body coating composition in which the initiator or the like has been mixed is degassed under reduced pressure, and then charged into the fiber-reinforced resin molded body coating composition tank. The reinforcing fibers are cut to predetermined dimensions.

US 6558590 B1 discloses a method for manufacturing a molded structure in a press that includes positioning a preform having a thickness in the lower mold, placing a quantity of resin adjacent the preform so as to create a resin reservoir, and then selectively actuating one or more pressure actuators to apply pressure to the resin reservoir to force at least a portion of the resin reservoir to infuse through the thickness of the preform. After the step of positioning, a top cover is placed upon the preform. The step of selectively actuating one or more of the pressure actuators attached to an upper platen, may include a computer for controlling the pressure actuators. Because the top cover is flexible, it can deform to accommodate flow of resin over, instead of through, the preform when the pressure actuators are released or partially released.

JP H04 226 726 A discloses a mold with a soft structure provided by fixing integrally thin molding layers supported by elastic back-up members on each molding face of a top force and a bottom force and providing a molten resin casting hole and a surface coating material casting hole communicated with the molding part. The molding layers are slightly deformed by the pressure of a resin filled in the molding part to make the molding part to be a normal thickness of a molded item, and the resin is filled in the molding part. After the cast resin is roughly cured, when a surface coating material is cast, the molding layer is slightly deformed by this cast pressure and a coating material with a uniform thickness is formed on the outer surface of an RTM molded item.

It is the object of the invention to provide a method of manufacturing a composite part in which the cycle time is significantly reduced.

The object is solved by a method of manufacturing a composite part comprising the steps: Providing a molding tool comprising a tool base and a tool lid, both configured to form a cavity between the tool base and the tool lid tool when the molding tool is closed; placing a fibre preform in the molding tool and tightly closing the molding tool so that the fibre preform is within the cavity; applying a predefined clamping pressure to press the tool lid and the tool base against each other; injecting a resin into the cavity under an injection pressure to infiltrate the fibre preform with the resin, wherein the predefined clamping pressure counteracts an opening force resulting from an inner tool pressure; and passively increasing the size of the cavity only by allowing an opening movement of the tool lid relative to the tool base when the inner tool pressure is greater than the predefined clamping pressure while keeping the cavity tightly closed.

**In** particular, the opening movement and/or the elastic deformation is caused only by the pressure difference between the inner tool pressure and the counteracting predefined clamping pressure, i.e. there are no other forces causing that movement and/or deformation.

By the invention, the time to infiltrate the preform is significantly reduced, which leads to a significant reduction of the cycle time in manufacturing composite parts.

Preferably, a gap is formed between the tool lid and the tool base by the opening movement and/or the elastic deformation.

In particular, the increased size of the cavity due to the opening movement corresponds to the gap size.

Preferably, the opening movement is performed by a parallel displacement of the tool lid relative to the tool base.

Preferably, the inner tool pressure is resulting from the injection speed, the permeability of the fibre preform and the viscosity of the resin.

Preferably, the gap or the allowable size of the cavity is limited to a predefined maximum.

Preferably, a local or global elastic deformation of the tool is allowed to passively increase the size of the cavity in addition to the opening movement when the size of the cavity is increased.

Preferably, the deformation of the tool is controlled by a defined stiffness of the tool and/or a defined stiffness of a support of the tool within a tool press, which is e.g. configured to apply the clamping pressure on the molding tool.

Preferably, the injection pressure is limited while a maximum injection flow rate is allowed.

Preferably, the opening movement and/or elastic deformation of the tool is controlled by the difference between the inner or internal tool pressure and the clamping pressure.

Preferably, the tool opening is self-adapting during the injection of the resin by selecting a maximum inner tool pressure in combination with the predefined clamping pressure and by limiting the tool opening.

Preferably, the clamping pressure is increased to completely close the tool again as soon as a desired resin volume is injected.

According to an aspect of the invention, a tool for manufacturing a composite part is provided, comprising a tool base and a tool lid, both configured to form a tightly closed cavity between the tool base and the tool lid for holding a fibre preform within the cavity when the molding tool is closed; and an injection device for injecting a resin into the cavity under an injection pressure to infiltrate the fibre preform within the cavity with the resin; wherein the molding tool is configured to perform an opening movement of the tool lid relative to the tool base when the inner or internal tool pressure is greater than the predefined clamping pressure while keeping the cavity tightly closed, to passively increase the size of the cavity.

In particular, passively increasing the size of the cavity means that it is increased exclusively by allowing the opening movement and/or the elastic deformation of the tool lid relative to the tool base. In other words, there is no force applied to the tool other than the pressure difference between the inner pressure of the tool, i.e. the interior pressure within the tool caused by the resin injection into the tool, and the predefined clamping pressure which presses the tool lid and the tool base against each other.

Additionally to the opening movement or as an alternative thereto, the molding tool may be configured to allow the elastic deformation of the tool, which also increases the size of the cavity when the inner tool pressure is greater than the predefined clamping pressure, while keeping the cavity tightly closed.

Preferably, the opening movement and/or the elastic deformation is caused only by the pressure difference between the inner tool pressure and the counteracting predefined clamping pressure, i.e. there are no other forces causing that movement deformation and/or deformation.

Preferably, the molding tool is configured to perform the method according to the invention.

The method provides a passive gap Resin Transfer Molding (RTM) Process. It can be applied to any RTM process, but is especially beneficial to large RTM components such as e.g. wing covers of an aircraft. The process reduces the time to infiltrate the preform significantly and thus leads to a reduction of the cycle time during manufacturing.

A specific advantage is a simplification in the process and the needed tool design, as the gap is passively created by the inner tool pressure.

In particular, the stiffness of the tool and the clamping force or pressure are defining the gap opening during the process.

The deformation of the tool can be controlled by the design of the tool. The opening of the tool may be controlled by the difference between inner tool pressure and clamping force or clamping pressure. In particular, both parameters are controlled to control the overall process.

This can for example be achieved by limiting the injection pressure, but allowing a maximum injection flow rate. This maximum tool pressure in combination with the clamping pressure and e.g. a mechanical limitation of the tool opening leads to a self-adapting tool opening during the injection process.

The term "opening" or "opening movement" of the molding tool and the "elastic deformation" shall be understood in a way that the cavity size is increased, however, the tool and in particular the cavity therein remains tightly closed to the outer environment by a seal or seal arrangement provided in the molding tool.

As soon as the desired resin volume is injected, the clamping force or pressure will be increased to close the tool again completely by a closing movement to ensure a proper geometrical control during the cure cycle.

In conclusion, the Passive Gap RTM Process according to the invention provides the advantages of an RTM process where a gap is actively formed, but is reducing the system complexity significantly.

Embodiments of the invention are described in more detail with reference to the accompanying drawings, in which
- **Fig. 1**: depicts a schematic sectional view of an example of an RTM tool according to a preferred embodiment of the invention, which is used in the method according to the invention; and
- **Fig. 2**: depicts a schematic sectional view of the tool shown in Fig. 1 when injecting resin into the tool, according to a particularly preferred embodiment of the invention.

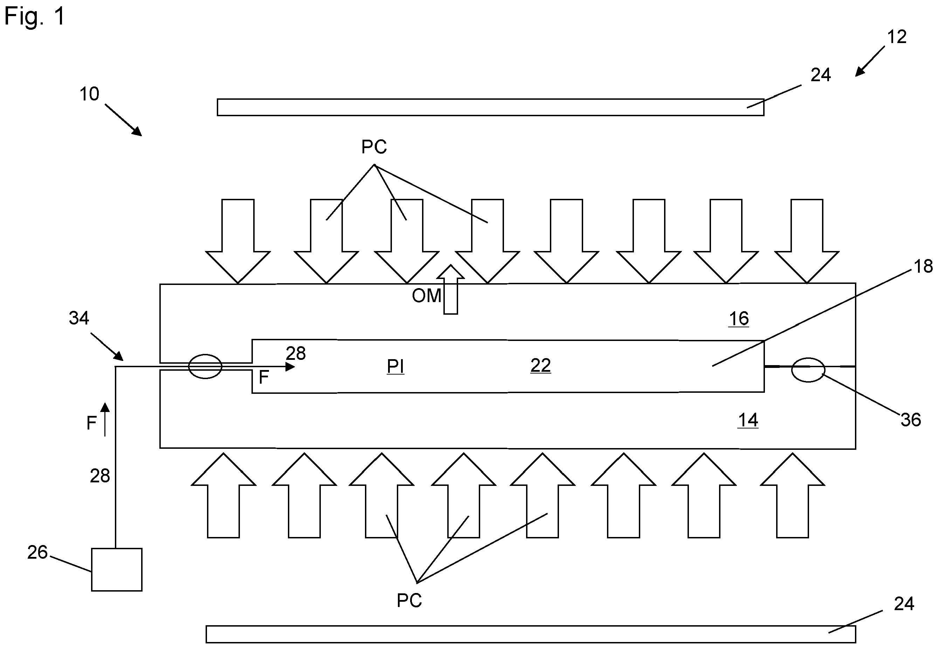

Reference is made to **Fig. 1****,** which schematically shows a molding tool 10 for manufacturing a composite part. The molding tool 10 comprises a tool base 14 and a tool lid 16 which form a cavity 18 between the tool base 14 and the tool lid 16 when the lid 16 is placed on the tool base 14. The cavity 18 is configured for holding a fibre preform 22 inside cavity 18 when the molding tool 10 is tightly closed, i.e. when lid 16 is placed on base 14.

An injection device 26 is provided for injecting a resin 28 into cavity 18 under and injection pressure, to infiltrate the fibre preform 22 placed within cavity 18 with the injected resin 28.

The molding tool 10 is designed in a way that it performs an opening movement OM of tool lid 16 relative to the tool base 14 when an inner tool pressure PI, which is the pressure established within molding tool 10 when resin 28 is injected into cavity 18, is greater than a predefined clamping pressure PC acting on the molding tool 10, which presses the tool lid 16 against tool base 14 when the resin 28 is injected.

That means that a pressure difference between inner or internal tool pressure PI, which establishes during the injection process, and the predefined clamping force or clamping pressure PC, causes the opening movement OM of molding tool 10. The opening movement OM results in an increased size of the cavity 18 and thus forms a gap between tool base 14 and told lid 16.

The molding tool 10 comprises a seal 36 or seal arrangement, ensuring that the molding tool 10 is kept tightly closed during the opening movement OM, i.e. when lid 16 is moving away from base 14 due to the pressure difference between inner tool pressure PI and the counteracting force or clamping pressure PC.

For applying the predefined clamping pressure PC to molding tool 10 for pressing the tool lid 16 and the tool base 14 against each other, a press 24 is provided which is only schematically indicated in Fig. 1. The molding tool 10 together with press 24 may form a system 12 for manufacturing a composite part.

The press 24 is configured to apply clamping force PC or clamping pressure without any displacement control. The seal 36 of molding tool 10 allows to create a tool opening or without loss of tightness.

During the injection of resin 28, there will be the natural inner pressure PI as a result from the injection or the injection flow speed and the permeability of the fibre preform and the viscosity of the resin 28.

The tool 10 is configured in a way that it will open, i.e. perform the opening movement OM, as soon as the natural inner pressure PI is larger than the predefined clamping pressure PC. The maximum allowable gap or tool opening is limited, e.g. by mechanical means, to a predefined maximum. The allowable gap or tool opening is typically in the range of 1 to 5 mm for parts having a thickness of up to 25 mm. Larger thicknesses may need larger gaps. Of course, depending of the specific configuration and requirements, the allowable gap or tool opening may be different.

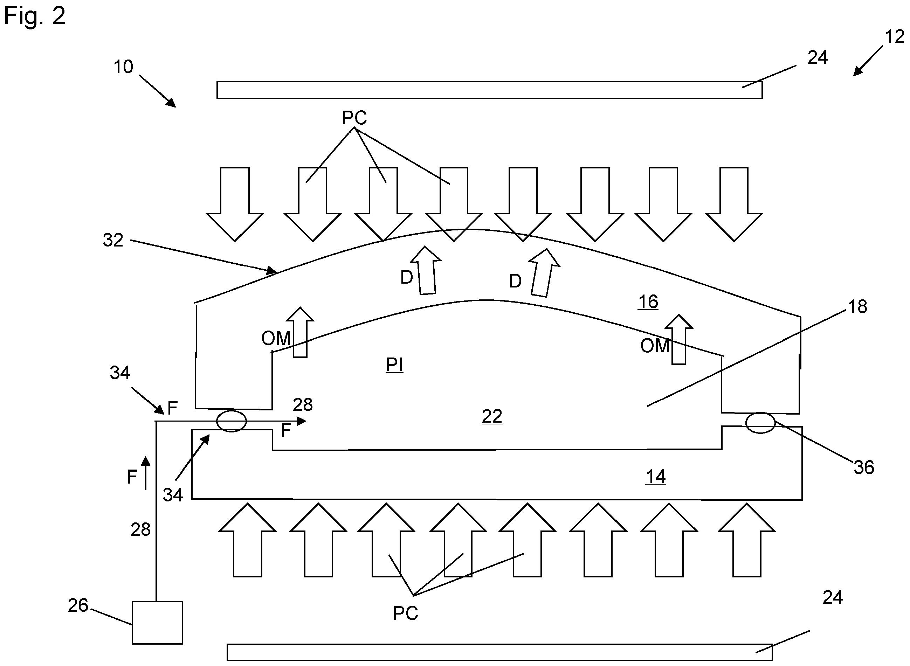

According to a specific design of the molding tool 10, a deformation 32 of the tool 10, and specifically of its lid 16, may also happen, as can be seen from **Figure 2****,** which shows the allowed deformation 32 of tool lid 16. A deformation movement D of tool lid 16 leading to deformation D is indicated by arrows. The opening or opening movement OM shown in Fig 1 and/or the alternative or additional deformation D or bending of tool lid 16 shown in Figs. 1 and 2 are caused by inner pressure PI of the tool 10 which counteracts to the clamping force or clamping pressure PC.

During injection, the resin pressure PI is e.g. up to 7 bar, which creates the opening force resulting in the opening movement OM and/or, according to a specific configuration of tool 10, the deformation 32 or deformation movement D of the tool 10 or the tool lid 16, either one or both of them forming the additional gap.

The tool 10 is preferably designed in a way that the displacement of the lid 16 during the opening movement OM is parallel. That means, the parallel orientation of lid 16 and base 14 is maintained during opening movement OM when the size of cavity 18 increases, in other words when the gap is formed.

By the tool opening or opening movement, and/or by the elastic deformation, the resulting gap increases the permeability and thus supports a faster injection of the resin into the fibre preform 22.

With reference to **Figs. 1** **and** **2****,** a preferred example of a method of manufacturing a composite part will be described in the following. In this example, the method of manufacturing a composite part is performed by using the molding tool 10 as described above.

First, the molding tool 10 is provided, which comprises tool base 14 and tool lid 16. When the tool 10 is closed, cavity 18 is formed between the tool base 14 and the tool lid 16.

Then, a fibre preform 22 is placed on tool base 14. Thereafter, the molding tool 10 is tightly closed so that fibre preform 22 is held within cavity 18. Then, a predefined clamping pressure PC is applied on molding tool 10, so that clamping pressure PC presses the tool lid 16 and the tool base 14 against each other. The clamping pressure PC counteracts to an opening force which results from inner tool pressure PI when the resin 28 is injected into the cavity 18.

Now, the resin 28 is injected into cavity 18 at a defined selected injection pressure, so that the fibre preform 22 located in the cavity 18 is infiltrated with resin 28. As a consequence, the internal pressure PI within the mold or molding tool 10 increases, while the clamping pressure PC counteracts to the inner pressure PI and an opening force resulting therefrom.

As shown in the figures, an opening movement OM of the tool lid 16 relative to the tool base 14 is allowed when the inner tool pressure PI resulting from the resin injection is greater than the predefined clamping pressure PC which presses the tool lid 16 and the tool base 14 against each other. As a result, the size of cavity 18 increases. During the opening movement OM, the cavity 18 is kept tightly closed by a seal or seal arrangement.

In other words, the size of the cavity 18 is increasing due to the pressure difference between the inner tool pressure PI and the clamping pressure PC only. That means, the size of the cavity 18 is increasing passively, i.e. without any forces other than the oppositely directed pressures PI and PC, and a gap is formed within the molding tool 10 between tool base 14 and tool lid 16. In this way, a passive gap RTM process is performed.

The defined clamping force or clamping pressure PC is applied by press 24 acting on the molding tool 10, preferably from opposite sides of the tool.

There is no control of the displacement of tool lid 16 relative to the base 14.

The molding tool 10 is equipped with seal 36 which allows to create the tool opening OM without loss of tightness.

During the injection, the inner tool pressure PI is a result of the resin injection, the flow speed of the resin 28 and the permeability of preform 22 within the cavity 18.

The resin injection is described in more detail in the following:
**Fig. 1** depicts step 1 of the resin injection into molding tool 10. When the resin injection is started, the molding tool 10 is fully closed, as the internal or inner tool pressure PI is smaller than the closing pressure or clamping pressure PC. A vacuum is provided in the tool 10, i.e. within cavity 18, wherein the pressure is e.g. smaller than 1 mbar at the beginning of the injection.

The resin 28 is injected by injection device 26 via a resin channel 34 provided in molding tool 10 and e.g. formed as a ring channel, into the cavity 18 where the preform 22 is placed. The resin pressure is e.g. in a range of 0 to 1 bar.

During injection, the resin 28 provided through the one or more resin channels 34 is propagating from one or more edges of the part or preform 22 within cavity 18 towards the part centre. This is supported by providing the vacuum in molding tool 10. The resin flow F within the molding tool 10 is indicated by arrows.

Additional resin channels 34 forming feed lines for the resin 28 may be provided, e.g. at top edges of the part which may be formed as a stringer for an aircraft.

Step 2 of the resin injection into molding tool 10 can be seen best in **Fig. 2****.** The pressure PI within the tool 10 increases and the tool opening or opening movement OM (also indicated in Fig. 1) and preferably also an elastic tool deformation D starts, which creates the gap and improves the injection speed. However, it is also possible that the tool 10 is configured to perform either the opening movement OM or the tool deformation D..

The tool 10 performs the opening movement OM due to the inner pressure PI being greater than the clamping force PC. The opening or opening movement OM can in particular be a combination of lifting the lid 16 and/or the elastic deformation of the tool 10, both due to the pressure difference between PI and PC.

During step 2 of the injection, the resin 28 injected via resin ring channel 34 further propagates from the edges of the part or preform 22 towards its centre (see Fig. 2). In this example, depending on the preform, the resin 28 propagates as well from further edges of the part of preform to its center, which may be top edges of a stringer of an aircraft.

The resin pressure increases up to 7 bar for example, which creates the opening force acting e.g. on tool lid 16. The molding tool 10 starts to open, i.e. to perform the opening movement OM, when the inner pressure PI of the tool 10 increases to a value which is greater than the clamping pressure PC. That means, as soon as this inner pressure PI is larger than the predefined clamping pressure PC, the tool 10 will open, i.e. it will perform the opening movement OM. Seals 36 are provided to keep the tool 10 tightly close during the opening movement.

The maximum allowable tool opening is preferably limited, e.g. by mechanical means, to a predefined maximum which is typically 1 to 5 mm for parts up to 25 mm thickness. Larger thicknesses might need larger gaps.

As described above, according to a specifically preferred embodiment, the deformation 32 of the tool 10 starts during pressure increase. That means, a local or global deformation movement D of the tool 10 may also happen, based or depending on the stiffness and support of the tool 10 in the press 24.

This can support forming the gap in addition to the parallel displacement of the lid 16 relative to the tool base 14. The tool opening OM and/or the optional or alternative tool deformation 32 create the gap and improve the injection speed of the resin.

The opening or opening movement OM due to the increasing in the pressure PI within molding tool 10 increases the overall size of the cavity 18. The bending or deformation movement D leading to deformation 32 of the tool 10 or tool lid 16 locally increases the size of cavity 18 as well, which is preferably in superposition with the opening or opening movement OM.

The increase of cavity 18 results in a reduction of the volume fibre content Vf or volume fraction of fibers, and thus in an increase of the permeability. As a consequence of the permeability increase, the resulting inner pressure with PI within tool 10 is reduced. This pressure reduction leads to a closing movement of the tool 10 opposite to the previous opening movement and to an increase of the flow of the resin. In this way, a flow control injection is performed.

According to a preferred option, the deformation 32 and/or the opening or opening movement OM of the molding tool 10 is measured in order to control the clamping force or clamping pressure PC applied to the tool. In this way, the opening or gap is maximized to allow for the lowest volume fibre content Vf, which means highest permeability, and thus to allow for fastest injection.

### List of reference signs:

- 10: molding tool
- 12: molding system
- 14: tool base
- 16: tool lid
- 18: cavity
- 22: preform
- 24: press
- 26: injection device
- 28: resin
- 32: deformation
- 34: resin channel
- 36: seal

- D: deformation movement
- F: resin flow
- OM: opening movement
- PC: clamping pressure
- PI: inner tool pressure

## Claims

1. Method of manufacturing a composite part comprising the steps:
- Providing a molding tool (10) comprising a tool base (14) and a tool lid (16), both configured to form a cavity (18) between the tool base (14) and the tool lid (16) tool when the molding tool (10) is closed;
- Placing a fibre preform (22) in the molding tool (10) and tightly closing the molding tool (10) so that the fibre preform (22) is within the cavity (18);
- Applying a predefined clamping pressure (PC) to press the tool lid (16) and the tool base (14) against each other;
- Injecting a resin (28) into the cavity (18) at an injection pressure to infiltrate the fibre preform (22) with the resin (28), wherein the predefined clamping pressure (PC) counteracts an opening force resulting from an inner tool pressure (PI);
**characterized in that**
- the size of the cavity (18) is passively increased only by allowing an opening movement (OM) of the tool lid (16) relative to the tool base (14) when the inner tool pressure (PI) is greater than the predefined clamping pressure (PC), while keeping the cavity (18) tightly closed.

2. Method according to claim 1, **characterized in that** the opening movement (OM) forms a gap between the tool lid (16) and the tool base (14) by a parallel displacement of the tool lid (16) relative to the tool base (14).

3. Method according to claim 1 or 2, **characterized in that** the inner tool pressure (PI) is resulting from the injection speed, the permeability of the fibre preform (22) and the viscosity of the resin (28).

4. Method according to one of the preceding claims, **characterized in that** the allowable size of the cavity (18) achieved by the opening movement (OM) is limited to a predefined maximum.

5. Method according to one of the preceding claims, **characterized in that** a local or global elastic deformation (32) of the molding tool (10) is allowed in addition to the opening movement (OM) when the size of the cavity (18) is increased.

6. Method according to claim 5, **characterized in that** the deformation (32) of the tool is controlled only by a defined stiffness of the molding tool (10) and/or a defined stiffness of a support of the tool (10) within a tool press (24).

7. Method according to one of the preceding claims, **characterized in that**
7.1. the injection pressure is limited while a maximum injection flow rate is allowed; and/or
7.2. the opening movement (OM) of the tool is controlled by the difference between the inner tool pressure (PI) and the clamping pressure (PC).

8. Method according to one of the preceding claims, **characterized in that** the tool opening is self-adapting during the injection of the resin (28) by selecting a maximum inner tool pressure (PI) in combination with the predefined clamping pressure (PC) and by limiting the tool (10) opening.

9. Method according to one of claims 5 to 8, **characterized in that** the elastic deformation (32) is self-adapting during the injection of the resin (28) by selecting a maximum inner tool pressure (PI) in combination with the predefined clamping pressure (PC) and by limiting the tool (10) opening

10. Method according to one of the preceding claims, **characterized in that** the clamping pressure (PC) is increased to completely close the tool (10) again as soon as a desired resin (28) volume is injected.

11. Molding tool for manufacturing a composite part comprising
a tool base (14) and a tool lid (16), both configured to form a tightly closed cavity (18) between the tool base (14) and the tool lid (16) for holding a fibre preform (22) within the cavity (18) when the molding tool (10) is closed;
an injection device (26) for injecting a resin (28) into the cavity (18) under an injection pressure to infiltrate the fibre preform (22) within the cavity (18) with the resin (28);
**characterized in that**
the molding tool (10) is configured to perform an opening movement (OM) of the tool lid (16) relative to the tool base (14) when the inner tool pressure (PI) is greater than a predefined clamping pressure (PC) pressing the tool lid (16) against tool base (14) during operation, to passively increase the size of the cavity (18) while keeping the cavity (18) tightly closed.

12. Molding tool according to claim 11, **characterized in that** it is configured to perform an elastic deformation (32) of the tool lid (16) relative to the tool base (14) when the inner tool pressure (PI) is greater than the predefined clamping pressure (PC) pressing the tool lid (16) against tool base (14) during operation, to passively increase the size of the cavity (18) while keeping the cavity (18) tightly closed.

## Patentansprüche

1. Verfahren zur Herstellung eines Verbundteils, umfassend die Schritte:
- Bereitstellen eines Formwerkzeugs (10), das eine Werkzeugbasis (14) und einen Werkzeugdeckel (16) umfasst, die beide dazu ausgelegt sind, einen Hohlraum (18) zwischen der Werkzeugbasis (14) und dem Werkzeugdeckel (16) des Werkzeugs zu bilden, wenn das Formwerkzeug (10) geschlossen ist;
- Einbringen eines Faservorformlings (22) in das Formwerkzeug (10) und dichtes Schließen des Formwerkzeugs (10), so dass sich der Faservorformling (22) in dem Hohlraum (18) befindet;
- Anlegen eines vorgegebenen Klemmdrucks (PC), um den Werkzeugdeckel (16) und den Werkzeugsockel (14) gegeneinander zu drücken;
- Einspritzen eines Harzes (28) in den Hohlraum (18) mit einem Einspritzdruck, um den Faservorformling (22) mit dem Harz (28) zu infiltrieren, wobei der vorgegebene Klemmdruck (PC) einer Öffnungskraft entgegenwirkt, die sich aus einem inneren Werkzeugdruck (PI) ergibt;
**dadurch gekennzeichnet, dass**
- die Größe des Hohlraums (18) nur passiv vergrößert wird, indem eine Öffnungsbewegung (OM) des Werkzeugdeckels (16) relativ zu der Werkzeugbasis (14) zugelassen wird, wenn der innere Werkzeugdruck (PI) größer als der vorgegebene Klemmdruck (PC) ist, während der Hohlraum (18) dicht verschlossen bleibt.

2. Verfahren nach Anspruch 1, **dadurch gekennzeichnet, dass** die Öffnungsbewegung (OM) durch eine Parallelverschiebung des Werkzeugdeckels (16) relativ zu der Werkzeugbasis (14) einen Spalt zwischen dem Werkzeugdeckel (16) und der Werkzeugbasis (14) bildet.

3. Verfahren nach Anspruch 1 oder 2, **dadurch gekennzeichnet, dass** sich der Werkzeuginnendruck (PI) aus der Einspritzgeschwindigkeit, der Permeabilität des Faservorformlings (22) und der Viskosität des Harzes (28) ergibt.

4. Verfahren nach einem der vorstehenden Ansprüche, **dadurch gekennzeichnet, dass** die durch die Öffnungsbewegung (OM) erzielte zulässige Größe des Hohlraums (18) auf ein vorgegebenes Maximum begrenzt ist.

5. Verfahren nach einem der vorstehenden Ansprüche, **dadurch gekennzeichnet, dass** bei Vergrößerung des Hohlraums (18) zusätzlich zu der Öffnungsbewegung (OM) eine lokale oder globale elastische Verformung (32) des Formwerkzeugs (10) zugelassen wird.

6. Verfahren nach Anspruch 5, **dadurch gekennzeichnet, dass** die Verformung (32) des Werkzeugs nur durch eine definierte Steifigkeit des Formwerkzeugs (10) und/oder eine definierte Steifigkeit eines Trägers des Werkzeugs (10) innerhalb einer Werkzeugpresse (24) gesteuert wird.

7. Anordnung nach einem der vorstehenden Ansprüche, **dadurch gekennzeichnet, dass**
7.1. der Einspritzdruck begrenzt wird, während ein maximaler Einspritzdurchsatz zugelassen ist; und/oder
7.2. die Öffnungsbewegung (OM) des Werkzeugs durch die Differenz zwischen dem inneren Werkzeugdruck (PI) und dem Klemmdruck (PC) gesteuert wird.

8. Verfahren nach einem der vorstehenden Ansprüche, **dadurch gekennzeichnet, dass** sich die Werkzeugöffnung bei dem Einspritzen des Harzes (28) durch Auswählen eines maximalen Werkzeuginnendrucks (PI) in Kombination mit dem vorgegebenen Klemmdruck (PC) und durch Begrenzen der Werkzeugöffnung (10) selbst anpasst.

9. Verfahren nach einem der Ansprüche 5 bis 8, **dadurch gekennzeichnet, dass** sich die elastische Verformung (32) bei dem Einspritzen des Harzes (28) durch Auswählen eines maximalen Werkzeuginnendrucks (PI) in Kombination mit dem vorgegebenen Klemmdruck (PC) und durch Begrenzen der Werkzeugöffnung (10) selbst anpasst.

10. Verfahren nach einem der vorstehenden Ansprüche, **dadurch gekennzeichnet, dass** der Klemmdruck (PC) erhöht wird, um das Werkzeug (10) wieder vollständig zu schließen, sobald ein gewünschtes Harzvolumen (28) eingespritzt ist.

11. Formwerkzeug zur Herstellung eines Verbundteils, umfassend:
eine Werkzeugbasis (14) und einen Werkzeugdeckel (16), beide dazu ausgelegt, einen dicht geschlossenen Hohlraum (18) zwischen der Werkzeugbasis (14) und dem Werkzeugdeckel (16) zum Halten eines Faservorformlings (22) in dem Hohlraum (18) zu bilden, wenn das Formwerkzeug (10) geschlossen ist;
eine Einspritzvorrichtung (26) zum Einspritzen eines Harzes (28) in den Hohlraum (18) unter einem Einspritzdruck, um den Faservorformling (22) in dem Hohlraum (18) mit dem Harz (28) zu infiltrieren;
**dadurch gekennzeichnet, dass**
das Formwerkzeug (10) dazu ausgelegt ist, eine Öffnungsbewegung (OM) des Werkzeugdeckels (16) relativ zu der Werkzeugbasis (14) durchzuführen, wenn der innere Werkzeugdruck (PI) größer als ein vorgegebener Klemmdruck (PC) ist, der den Werkzeugdeckel (16) während des Betriebs gegen den Werkzeugbasis (14) drückt, um die Größe des Hohlraums (18) passiv zu vergrößern, während der Hohlraum (18) dicht verschlossen gehalten wird.

12. Formwerkzeug nach Anspruch 11, **dadurch gekennzeichnet, dass** es dazu gestaltet ist, eine elastische Verformung (32) des Werkzeugdeckels (16) relativ zu der Werkzeugbasis (14) durchzuführen, wenn der Werkzeuginnendruck (PI) größer ist als der vorgegebene Klemmdruck (PC), der den Werkzeugdeckel (16) im Betrieb gegen den Werkzeugbasis (14) drückt, um die Größe des Hohlraums (18) passiv zu vergrößern, während der Hohlraum (18) dicht verschlossen gehalten wird.

## Revendications

1. Procédé de fabrication d'une pièce composite comprenant les étapes suivantes :
- obtention d'un outil de moulage (10) comprenant une base d'outil (14) et un couvercle d'outil (16), tous deux conçus pour former une cavité (18) entre la base d'outil (14) et le couvercle d'outil (16) quand l'outil de moulage (10) est fermé ;
- mise en place d'une préforme fibreuse (22) dans l'outil de moulage (10) et fermeture hermétique de l'outil de moulage (10) pour que la préforme fibreuse (22) se situe à l'intérieur de la cavité (18) ;
- application d'une pression de serrage prédéfinie (PC) pour plaquer le couvercle d'outil (16) et la base d'outil (14) l'un contre l'autre ;
- injection d'une résine (28) dans la cavité (18) à une pression d'injection permettant à la résine (28) de s'infiltrer dans la préforme fibreuse (22), la pression de serrage prédéfinie (PC) contrebalançant une force d'ouverture résultant d'une pression interne d'outil (PI) ;
**caractérisé en ce que**
- la taille de la cavité (18) est augmentée passivement par le simple fait d'autoriser un mouvement d'ouverture (OM) du couvercle d'outil (16) par rapport à la base d'outil (14) lorsque la pression interne d'outil (PI) est supérieure à la pression de serrage prédéfinie (PC), tout en maintenant la cavité (18) hermétiquement fermée.

2. Procédé selon la revendication 1, **caractérisé en ce que** le mouvement d'ouverture (OM) forme un interstice entre le couvercle d'outil (16) et la base d'outil (14) par un déplacement parallèle du couvercle d'outil (16) par rapport à la base d'outil (14).

3. Procédé selon la revendication 1 ou 2, **caractérisé en ce que** la pression interne d'outil (PI) résulte de la vitesse d'injection, de la perméabilité de la préforme fibreuse (22) et de la viscosité de la résine (28).

4. Procédé selon une des revendications précédentes, **caractérisé en ce que** la taille autorisée de la cavité (18) obtenue par le mouvement d'ouverture (OM) est limitée à un maximum prédéfini.

5. Procédé selon une des revendications précédentes, **caractérisé en ce qu'**une déformation élastique locale ou globale (32) de l'outil de moulage (10) est autorisée en plus du mouvement d'ouverture (OM) lorsque la taille de la cavité (18) est augmentée.

6. Procédé selon la revendication 5, **caractérisé en ce que** la déformation (32) de l'outil est uniquement contrôlée par une rigidité définie de l'outil de moulage (10) et/ou une rigidité définie d'un support de l'outil (10) à l'intérieur d'une presse à outil (24).

7. Procédé selon une des revendications précédentes, **caractérisé en ce que**
7.1. la pression d'injection est limitée quand un débit maximal d'injection est autorisé ; et/ou
7.2. le mouvement d'ouverture (OM) de l'outil est contrôlé par la différence entre la pression interne d'outil (PI) et la pression de serrage (PC).

8. Procédé selon une des revendications précédentes, **caractérisé en ce que** l'ouverture d'outil s'adapte automatiquement pendant l'injection de la résine (28) par sélection d'une pression interne d'outil maximale (PI) combinée à la pression de serrage prédéfinie (PC) et par limitation de l'ouverture de l'outil (10).

9. Procédé selon une des revendications 5 à 8, **caractérisé en ce que** la déformation élastique (32) s'adapte automatiquement pendant l'injection de la résine (28) par sélection d'une pression interne d'outil maximale (PI) combinée à la pression de serrage prédéfinie (PC) et par limitation de l'ouverture de l'outil (10).

10. Procédé selon une des revendications précédentes, **caractérisé en ce que** la pression de serrage (PC) est augmentée pour refermer complètement l'outil (10) dès qu'un volume souhaité de résine (28) est injecté.

11. Outil de moulage destiné à fabriquer une pièce composite comprenant
une base d'outil (14) et un couvercle d'outil (16), tous deux conçus pour former une cavité hermétiquement fermée (18) entre la base d'outil (14) et le couvercle d'outil (16) afin de maintenir une préforme fibreuse (22) à l'intérieur de la cavité (18) lorsque l'outil de moulage (10) est fermé ;
un dispositif d'injection (26) destiné à injecter une résine (28) dans la cavité (18) sous une pression d'injection permettant à la résine (28) de s'infiltrer dans la préforme fibreuse (22) à l'intérieur de la cavité (18) ;
**caractérisé en ce que**
l'outil de moulage (10) est conçu pour effectuer un mouvement d'ouverture (OM) du couvercle d'outil (16) par rapport à la base d'outil (14) lorsque la pression interne d'outil (PI) est supérieure à une pression de serrage prédéfinie (PC) plaquant le couvercle d'outil (16) contre la base d'outil (14) en fonctionnement, afin d'augmenter passivement la taille de la cavité (18) tout en maintenant la cavité (18) hermétiquement fermée.

12. Outil de moulage selon la revendication 11, **caractérisé en ce qu'**il est conçu pour effectuer une déformation élastique (32) du couvercle d'outil (16) par rapport à la base d'outil (14) lorsque la pression interne d'outil (PI) est supérieure à la pression de serrage prédéfinie (PC) plaquant le couvercle d'outil (16) contre la base d'outil (14) en fonctionnement, afin d'augmenter passivement la taille de la cavité (18) tout en maintenant la cavité (18) hermétiquement fermée.
